# EUROPEAN PATENT APPLICATION

(11) **EP 4 645 640 A1**
(43) Date of publication of application: **05.11.2025**
(21) Application number: 25171351.7
(22) Date of filing: 17.04.2025
(51) Int. Cl.: H02J 7/00, H01M 10/46

(54) **BATTERY CHARGING DEVICE**

(30) Priority: 30.04.2024 CN 202410535019
(71) Applicant: ChinaBridge (Shenzen) Medical Technology Co., Ltd., Shenzhen, Guangdong 518102 (CN)
(72) Inventor: LI, Yijiang, Shenzhen Guangdong, 518102 (CN)
(74) Representative: Pfenning, Meinig & Partner mbB

(57) **Abstract**

A battery charging device suitable for portable operation includes a charging box with a grip is provided on one side of the top of the charging box near a first opening, and when the battery charging device is lifted by the grip, the tilt direction of the battery charging device is consistent with the tilt direction of a battery compartment. The battery charging device can thereby reduce the risk of the battery easily falling out of the battery compartment during transportation, which improves the reliability of the battery charging device during transportation.

## Description

### Technical Field

The embodiments of the present application belong to the technical field of battery charging, and in particular, relate to a portable battery charging device.

### Background Art

In the field of medical equipment, some devices that require transport, such as the extracorporeal membrane oxygenation system (ECMO), usually have two power supply modes, one connected to a mains power supply (e.g., an electrical grid) and the other powered by a battery alone.

The batteries currently equipped in ECMO systems often cannot support long-term transportation. Usually, more batteries are prepared during transportation. The ECMO system is usually in a hurry during transportation, and thus time is very precious during the process. Therefore, in order to be suitable for such a situation, the battery charging device needs to be designed as conveniently as possible so that personnel can quickly plug and unplug. In some cases, it is even necessary to transport the battery charging device together.

However, due to the open design of the existing quick-plug battery charging device, there is a risk that the battery may fall out during outdoor transportation.

### Summary of the Invention

In order to solve or alleviate the technical problem of battery dislodgement during the transportation of a battery charging device in the existing technology, the embodiments of the present application provide a battery charging device, which comprises a charging box; the charging box is provided with a first chamber, and the first chamber is provided with a plurality of battery compartments for placing batteries; a first opening for taking in and out the first chamber is provided on one side of the charging box, and a side of the battery compartments where an inlet end of the battery compartments is located consistent with a side of the charging box where the first opening is located; an end of the battery compartments away from the inlet end is lower than the inlet end of the battery compartments, each of the battery compartments is provided with a charging port that matches one by one with a charging end of each battery; a grip is provided on a top of the charging box close to the first opening, and when the battery charging device is lifted by the grip, a tilt direction of the battery charging device is consistent with a tilt direction of the battery compartments.

As an embodiment of this application, the first chamber is provided with a drainage channel, each battery compartment is provided with a second opening at one end thereof away from the inlet end, each second opening is in communication with the drainage channel, and a liquid in the battery compartment is discharged through the second opening and the drainage channel.

As an embodiment of this application, an inner side of the battery compartment is provided with a support guide rib, and a battery in each battery compartment is tightly fitted with the support guide rib; the support guide rib is arranged in a direction from the inlet end to the end away from the inlet end, and there is a gap between the battery and an inner wall of the battery compartment. The liquid flowing into the battery compartment is drained to the second opening through the gap and then discharged through the drainage channel.

As an embodiment of this application, a liquid outlet pipe is provided at a bottom of the charging box, and the drainage channel is in communication with the liquid outlet pipe.

As an embodiment of this application, a height of a lower part of the second opening in the same battery compartment is lower than a height of a lower part of the inlet end of the battery compartment, and the height of the lower part of the inlet end of the battery compartment is lower than a height of a lower part of the charging port in the battery compartment.

As an embodiment of this application, an elastic shielding member is provided at the inlet end of each battery compartment, and the elastic shielding member contacts an upper surface of the battery to shield an inlet end of the gap between the upper surface of the battery and the inner wall of the battery compartment.

As an embodiment of this application, the battery charging device further comprises a protective plate, the protective plate is arranged on the side of the charging box where the first opening is located, and the side of the charging box where the protective plate is located is tilted in a direction away from the inlet end of the battery compartment.

As an embodiment of this application, a part of the battery at the inlet end of the battery compartment is exposed outside the battery compartment.

As an embodiment of this application, a fixing member is provided on a side wall of each battery compartment, and a power output terminal of the battery in each battery compartment is connected to the fixing member to fix the battery in each battery compartment on the side wall of the battery compartment.

As an embodiment of this application, a second chamber is provided in a bottom of the charging box, a switching power supply is provided in the second chamber, and the switching power supply is connected to the charging port.

As an embodiment of this application, a charging status display is provided on the side of the first opening of the charging box, and the charging status display is connected to the switching power supply.

Compared with the existing technology, the battery charging device provided in the embodiments of the present application includes a charging box, and a grip is provided on one side of the top of the charging box near the first opening. When the battery charging device is lifted by the grip, the tilt direction of the battery charging device is consistent with the tilt direction of the battery compartment(s). The battery charging device provided in the present application can reduce the risk of the battery easily falling out of the battery compartment during transportation, thereby improving the reliability of the battery charging device during transportation.

### Brief Description of the Drawings

The drawings described herein are used to provide further understanding of the present application and constitute a part of the present application. The illustrative embodiments of the present application and their descriptions are used to explain the present application and do not constitute an improper limitation on the present application. Some specific embodiments of the present application will be described in detail in an exemplary and non-restrictive manner with reference to the drawings. The same reference numerals in the drawings indicate the same or similar components or parts. It should be understood by a person skilled in the art that these drawings are not necessarily drawn to scale. In the drawings:
FIG. 1 is a schematic perspective diagram of the structure of a battery charging device provided in an embodiment of the present application, which is equipped with batteries;
FIG. 2 is a schematic perspective diagram of the structure of a battery charging device provided in an embodiment of the present application, which is not equipped with batteries;
FIG. 3 is a schematic diagram of the separation structure of a battery compartment and a charging box provided in an embodiment of the present application;
FIG. 4 is a schematic diagram of the front view structure of a battery charging device provided in an embodiment of the present application, which is equipped with batteries;
FIG. 5 is an A-A cross-sectional view of the battery charging device provided in FIG. 4;
FIG. 6 is a B-B cross-sectional view of the battery charging device provided in FIG. 4;
FIG. 7 is a C-C cross-sectional view of the battery charging device provided in FIG. 4;

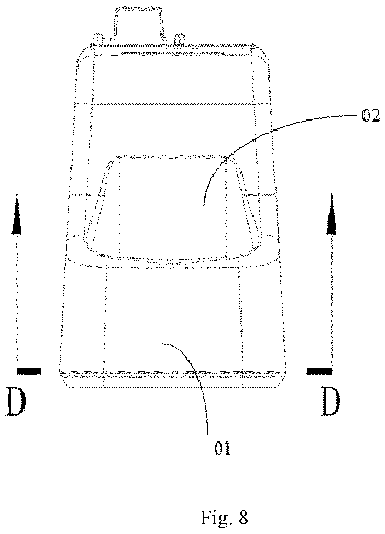

FIG. 8 is a schematic diagram of the top view structure of a battery charging device provided in an embodiment of the present application, which is equipped with a battery;
FIG. 9 is a D-D cross-sectional view of the battery charging device provided in FIG. 8;
FIG. 10 is a partial enlarged view of A shown in FIG. 3.

Figure numerals:
01 - charging box; 02 - grip; 03 - protective plate; 04 - first opening; 05 - battery compartment; 06 - drainage channel; 07 - second chamber; 08 - PCB board; 09 - heat dissipation hole; 10 - battery power indicator; 11 - AC indicator; 12 - support guide rib; 13 - second opening; 14 - switching power supply; 15 - liquid outlet pipe; 16 - battery; 17 - elastic shielding member; 18 - fixing member; 19 - charging port; 20 - power output terminal; 21 - liquid outlet; 22 - filter; 23 - containment box; 24 - inlet end; 25 - first chamber.

### Description of the Embodiments

In order to enable a person skilled in the art to better understand the solution of the present application, the technical solution in the embodiments of this application will be clearly and fully described below in combination with the drawings in the embodiments of the present application. Obviously, the described embodiments are only a part of the embodiments of the present application, not all of the embodiments. Based on the embodiments disclosed in the present application, all other embodiments obtained by a person of ordinary skill in the art without creative work should fall within the scope of protection of the present application.

An embodiment of the present application provides a battery charging device, which is mainly used when an extracorporeal membrane oxygenation system (ECMO) needs to be transported. The battery charging device that charges the battery in the extracorporeal membrane oxygenation system (ECMO) also needs to be transported. In order to meet the reliability of the battery charging device during transportation, the technical solution of the present application is proposed.

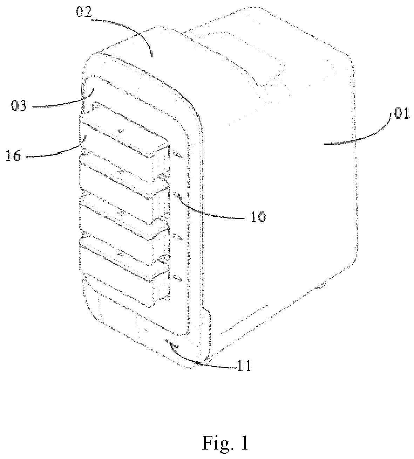

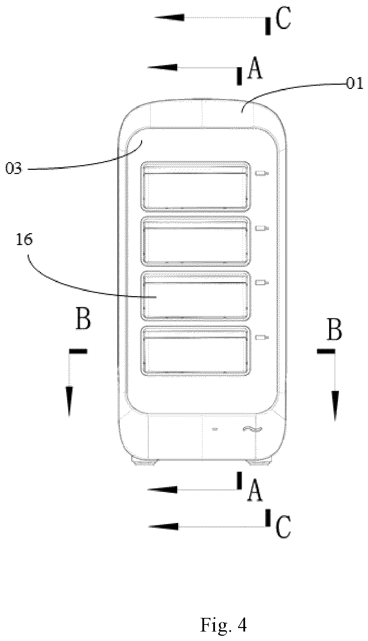

As shown in FIG. 1 to FIG. 4, a battery charging device provided in an embodiment of the present application specifically includes a charging box 01.

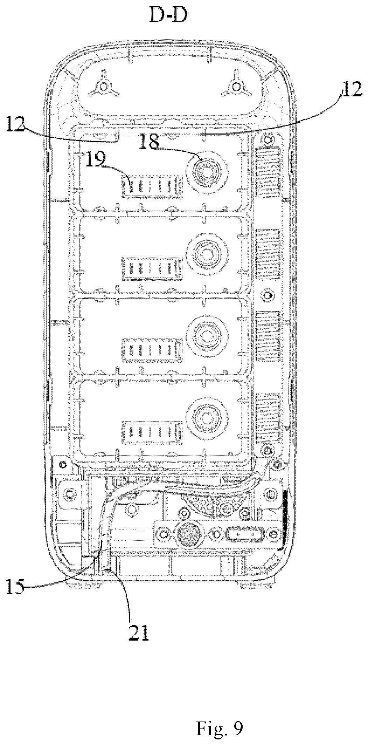

The charging box 01 is provided with a first chamber 25, and the first chamber 25 is provided with a plurality of battery compartments 05 for placing batteries 16. A first opening 04 for taking in and out the first chamber 25 is provided on one side of the charging box 01, and the side of the battery compartment 05 where the inlet end 24 of the battery compartment 05 is located is consistent with the side of the battery 16 box where the first opening 04 is located. The end of the battery compartment 05 away from the inlet end 24 is lower than the inlet end 24 of the battery compartment 05. Each of the battery compartments 05 is provided with a charging port 19 (shown in FIG. 9) matching the charging end of each battery 16. A grip 02 is provided on one side of the top of the charging box 01 close to the first opening 04. When the battery charging device is lifted by the grip 02, the tilt direction of the battery charging device is consistent with the tilt direction of the battery compartment 05.

In the embodiments of the present application, the charging box 01 and the battery compartment 05 are made of a plastic material and are formed by means of injection molding. More specifically, the charging box 01 and the first chamber 25 are separately injection molded. The grip 02 is the lifting part of the battery charging device, which can be a handle or a buckle formed by a chamber depression, or the like. The grip 02 can also be integrally injection molded with the charging box 01 to form a groove-shaped chamber part (as shown in FIG. 1) for easy lifting and carrying.

In the embodiments of the present application, when the ECMO system needs to be transported urgently, the time is relatively tight, so it is necessary to transport it together with the battery charging device of the battery that powers the ECMO system. Therefore, the battery charging device needs to be relatively portable to facilitate transportation. During the transportation of the battery charging device, the reliability of the battery charging device needs to be improved. In the present application, the charging box 01 is a chamber-shaped structure, and in order to facilitate transportation, a grip 02 is provided on one side of the top of the charging box 01 close to the first opening 04. Because the grip 02 is provided on one side of the top of the charging box 01 close to the first opening 04, when the battery charging device is lifted, the tilt direction of the battery charging device is consistent with the tilt direction of the battery compartment 05. In this case, if the battery 16 has been inserted from the inlet end 24 to the specified position, the battery 16 in each battery compartment 05 will not easily fall out from the inlet end 24 of the battery compartment 05. That is, in the present application, since the grip 02 is set at the front of the entire battery charging device of the charging box 01, when the battery charging device is lifted by the grip 02, the center of gravity of the battery charging device is at the rear of the grip 02, which makes the entire battery charging device form an upward tilted state where the front of the charging box 01 is higher than the rear. In the upward tilted state, the battery 16 in the battery compartment 05 is less likely to fall out of the battery compartment 05, such that the embodiments of the present application improve the reliability of the battery charging device during transportation. In the embodiments of the present application, the inlet end 24 of the battery compartment 05 is located at the front of the charging box 01, the charging port 19 of the battery 16 is located at the rear of the charging box 01, and the upward tilt is tilted away from the second chamber 07.

In one embodiment of the present application, as shown in FIG. 1 to 4 and 7, the battery charging device further includes a protective plate 03. The protective plate 03 is arranged on the side of the charging box 01 where the first opening 04 is located, and the side of the charging box 01 where the protective plate 03 is located is tilted toward the charging port 19 of the battery compartment 05.

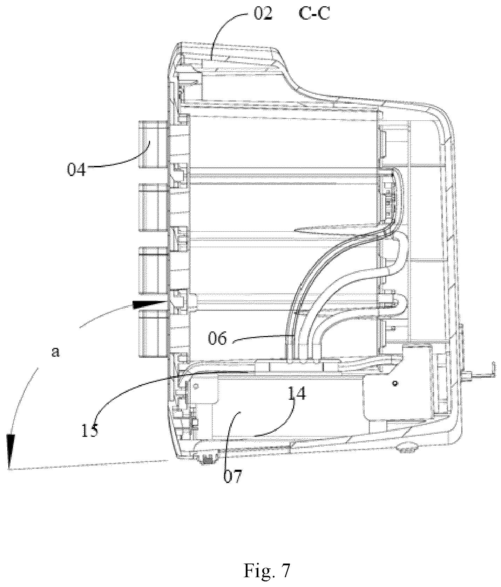

It should be noted that the front of the charging box 01 is equipped with a protective plate 03, and the protective plate 03 can be made of a plastic or metal such as aluminum alloy, stainless steel, etc. In some embodiments of the present application, it is preferred to use a pressure-resistant plastic material. Specifically, the side of the charging box 01 where the protective plate 03 is located is tilted at an angle a (shown in FIG. 7) toward the charging port 19 of the battery compartment 05. In some embodiments, the angle a is approximately 90°<a<150°, and in some embodiments, the angle a is approximately 93.5°.

In the embodiments of the present application, the protective plate 03 is used to increase the protection capability of the battery charging device. The protective plate 03 is connected to the charging box 01 by a fixed connection method such as snap-in or screw-in. The snap-in method is used to reduce production costs.

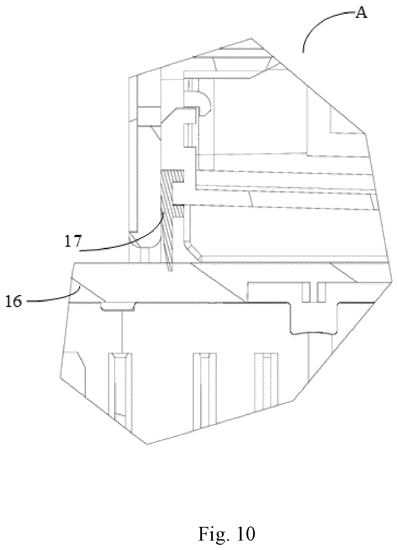

In one embodiment of the present application, the charging box 01 is provided with a slot for installing the elastic shielding member 17 (shown in Figure 10), and the elastic shielding member 17 is connected to the charging box 01 through the slot and fixed by the protective plate 03. Therefore, the protective plate 03 is also used to fix the elastic shielding member 17, and the overall appearance can be made more aesthetically pleasing through color adjustment.

In one embodiment of the present application, as shown in FIG. 1, the battery 16 at the inlet end 24 of the battery compartment 05 is exposed outside the battery compartment 05. That is, the battery 16 in the battery compartment 05 is arranged in the battery compartment 05 in a semi-exposed manner, so that it is convenient to take the battery 16 out of the battery compartment 05 or insert the battery 16 into the battery compartment 05.

Since the existing quick-plug battery charging device is an open design, there will be some defects in reliability if it is transported outdoors. For example, rainy or snowy weather may cause liquid to penetrate into the connection and cause failures.

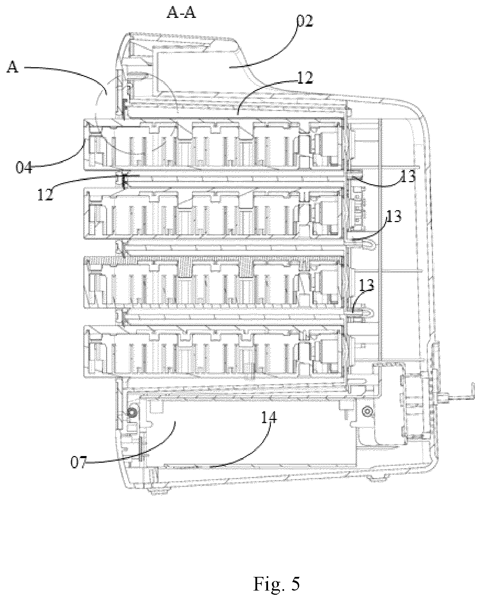

In one embodiment of the present application, as shown in FIG. 5 and FIG. 7, in order to solve the above problem, a drainage channel 06 is provided in the first chamber 25. Each battery compartment 05 has a second opening 13 at the end away from the inlet end 24, and each second opening 13 is connected to the drainage channel 06. The liquid in the battery compartment 05 can be discharged through the second opening 13 and the drainage channel 06. Since one end of the inlet end 24 of the battery compartment 05 is lower than the inlet end 24 of the battery compartment 05, the liquid flowing into the battery compartment 05 can be accelerated to flow to the second opening 13 more smoothly.

It should be noted that when the battery 16 is being charged, if there is liquid, such as water, in the battery compartment 05, it will affect the charging of the battery 16. Therefore, in order to ensure that the battery 16 can be charged safely and reliably in any weather, a drainage channel 06 is provided in the first chamber 25 of the charging box 01. In order to discharge the liquid from each battery compartment 05, a second opening 13 is provided at one end of each battery compartment 05 away from the inlet end 24. The liquid in the battery compartment 05 is discharged through the second opening 13 and the drainage channel 06. The embodiments of the present application can avoid the problem of charging failure caused by liquid infiltrating into the connection between the charging end of the battery in the battery compartment 05 and the charging port 19 in rainy or snowy weather. In addition, the liquid in the battery compartment 05 can be discharged through the second opening 13 before accumulating to the connection between the charging end of the battery 16 and the charging port 19, thereby reducing the interference of the liquid on the connection between the charging end of the battery 16 and the charging port 19.

In one embodiment of the present application, as shown in FIG. 5, 6 and 9, the inner side of the battery compartment 05 is provided with a support guide rib(s) 12, each of the four sides of the inner side of the battery compartment 05 has 2 to 3 support guide ribs 12, and each battery 16 in the battery compartment 05 is tightly fitted with the support guide ribs 12.

The support guide ribs 12 are arranged in a direction from the inlet end 24 to the end away from the inlet end 24. There is a gap between the battery 16 and the inner wall of the battery compartment 05. The liquid flowing into the battery compartment 05 through the inlet end 24 is drained to the second opening 13 through the gap and then discharged through the drainage channel 06.

It should be noted that the support guide ribs 12 can be bent, tilted, or vertically arranged, as long as they can satisfy the direction from the inlet end 24 to the end away from the inlet end 24. In some embodiments, the support guide ribs 12 are arranged vertically from the inlet end 24 to the end away from the inlet end 24.

In addition, since the battery 16 will generate heat during charging, so the support guide ribs 12 are provided inside the battery compartment 05. In some embodiments, the support guide ribs 12 are provided at the bottom of the battery compartment 05, and in some embodiments, the support guide ribs 12 are provided at intervals inside the battery compartment 05. That is, the support guide ribs 12 wrap around the entire battery 16, and a certain gap can be provided between the battery 16 and the side walls of the battery compartment 05 by means of the support guide ribs 12, which is conducive to the heat dissipation of the battery 16. At the same time, due to this gap, a circulation channel can be provided for the liquid flowing in from the inlet end 24 of the battery compartment 05, which is conducive to the liquid flowing quickly from the inlet end 24 of the battery compartment 05 to the second opening 13 for discharge. In addition, there is a certain gap between the support guide ribs 12 at the bottom of each battery compartment 05 and the lower part of the charging port 19, and the contact between the support guide rib 12 and the battery 16 reduces the contact area. Compared with surface contact, the setting of the support guide ribs 13 also has the function of preventing the battery 16 from getting stuck after insertion.

Furthermore, as shown in FIG. 7 and FIG. 9, a liquid outlet pipe 15 is provided at the bottom of the charging box 01, and the drainage channel 06 is in communication with the liquid outlet pipe 15 via the liquid outlet 21.

It should be noted that, in order to allow the liquid in the drainage channel 06 to be discharged smoothly, a liquid outlet pipe 15 is provided at the bottom of the charging box 01, and the drainage channel 06 is in communication with the liquid outlet pipe 15. This allows the liquid in the drainage channel 06 to be discharged to a position away from the battery charging device, which is conducive to the smooth discharge of the liquid. In the embodiments of the present application, the liquid outlet pipe 15 is arranged in front of the bottom of the charging box 01 for the purpose of easy observation. If liquid is observed to drip from the liquid outlet pipe 15, it can remind the user that liquid has infiltrated into the battery compartment 05.

In one embodiment of the present application, the height of the lower part of the second opening 13 in the same battery compartment 05 is lower than the height of the lower part of the inlet end 24 of the battery compartment 05, and the height of the lower part of the inlet end 24 of the battery compartment 05 is lower than the height of the lower part of the charging port in the battery compartment 05.

It should be noted that when there is a small amount of liquid in the battery compartment 05, it can be discharged through the second opening 13. Since the height of the inlet end 24 is lower than the height of the charging port 19, when there is a large amount of liquid, if the second opening 13 cannot discharge the liquid in time, and the liquid in the battery compartment 05 accumulates to the lower part of the inlet end 24, the liquid can be discharged from the inlet end 24, which avoids the occurrence of failures during the charging process of the battery 16. The above description is for the case where the battery charging device is in a static state. When the battery charging device is lifted and transported, the height relationship between the lower part of the inlet end 24, the lower part of the second opening 13 and the lower part of the charging port 19 in the same battery compartment 05 as described in the above embodiments will still be met.

In one embodiment of the present application, as shown in FIG. 10, an elastic shielding member 17 is provided at the inlet end 24 of each battery compartment 05. The elastic shielding member 17 contacts the upper surface of the battery 16 so as to shield the inlet end 24 of the gap between the upper surface of the battery 16 and the inner wall of the battery compartment 05.

It should be noted that, since the support guide ribs 12 are arranged around the inner wall of the battery compartment 05, there is a certain gap between the upper side of each battery compartment 05 and the battery 16. In order to prevent liquid from entering the battery compartment 05 from the upper surface of the battery 16 in rainy and snowy weather to affect the charging of the battery 16. Some embodiments of the present application are provided with the elastic shielding member 17, which can be made of a material with a certain hardness but elasticity such as PVC, PU or silicone, and can be formed into a strip and embedded and fixed on the upper side of the battery compartment 05. Since the elastic shielding member 17 is elastic, when the battery 16 is inserted into the battery compartment 05, the elastic shielding member 17 is in close contact with the upper surface of the battery 16. Thus, it also plays a certain sealing role, such as in rainy and snowy weather, preventing liquid from entering the battery compartment 05 from the upper surface of the battery 16, thereby avoiding affecting the charging of the battery 16 to cause a failure.

In the embodiments of the present application, the elastic shielding member 17 can be arranged vertically or in other ways, as long as the gap between the upper side of each battery compartment 05 and the upper surface of the battery 16 can be blocked, which all fall within the protection scope of the present application. In addition, by providing the elastic shielding member 17, after the battery 16 is inserted into the battery compartment 05, the elastic shielding member 17 can resist the upper surface of the battery 16 to provide a certain friction force, thereby reducing the probability of the battery 16 dislodging from the battery compartment 05. Since the elastic shielding member 17 is arranged above the battery 16, it can prevent the liquid from entering the battery compartment 05 from the top and flowing downward to interfere with the charging process of the battery 16.

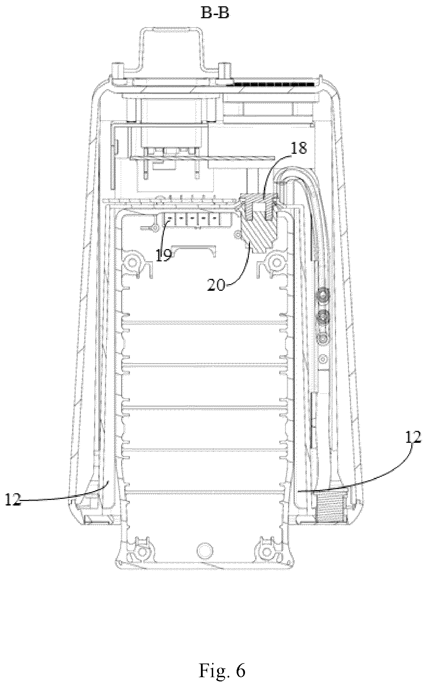

In one embodiment of the present application, as shown in FIG. 6 and FIG. 9, a fixing member 18 is provided on the side wall of each battery compartment 05. The power output terminal 20 of the battery 16 in each battery compartment 05 is engaged with the fixing member 18 to fix the battery 16 in each battery compartment 05 on the side wall of the battery compartment 05. In some embodiments, the fixing member 18 is an elastic fixing member, and in some embodiments, the fixing member 18 is an elastic plug-shaped member, for example, a silicone plug.

It should be noted that when the battery 16 is charged in the battery compartment 05, the battery 16 needs to be fixed. This can prevent the battery charging device from affecting the charging of the battery 16 during transportation or collision. Therefore, in the present application, a fixing member 18 is provided on the side wall of each battery compartment 05, and the fixing member 18 matches the power output terminal 20 of the battery 16. More specifically, the fixing member 18 is an elastic silicone plug, and the size of the fixing member 18 is slightly larger than the size of the power output terminal 20, forming an interference fit between the hole and shaft. By inserting the fixing member 18 into the power output terminal 20, they engage to fix each battery 16 in the battery compartment 05. The strengthening of the fixation of the battery 16 by the fixing member 18 thereby reduces the probability of the battery 16 accidentally falling out of the battery compartment 05.

In one embodiment of the present application, as shown in FIG. 5 and FIG. 7, a second chamber 07 is provided on the inner side of the bottom of the charging box 01, a switching power supply 14 is provided in the second chamber 07, and the switching power supply 14 is connected to the charging port 19.

It should be noted that the switching power supply 14 is provided in the second chamber 07, and the switching power supply 14 is connected to the charging port 19 via the PCB board 08 to provide power to the charging port 19. The switching power supply 14 is quite heavy. Since the switching power supply 14 is provided at the bottom of the battery charging device, it can stabilize the entire battery charging device when the battery charging device is laid flat. When the battery charging device is lifted for transportation, the center of gravity of the battery charging device is relatively low, which can prevent the charging box 01 from tilting at a large angle. At the same time, it can still meet the requirement that the lower part height of the inlet end 24 of the battery compartment 05 is lower than the lower part height of the charging port 19 in the battery compartment 05. Thus, when a large amount of liquid enters the battery compartment 05 (the second opening 13 cannot discharge the liquid in time, so that the liquid accumulates in the battery compartment 05 and reaches the height of the lower part of the inlet end 24), it can achieve faster drainage.

In one embodiment of the present application, as shown in FIG. 1, a charging status display is provided on the side of the first opening 04 of the charging box 01, and the charging status display is connected to the switching power supply 14.

It should be noted that by providing the charging status display, it is convenient to observe the specific parameters of the battery 16 charged by the battery charging device and whether the battery 16 in each battery compartment 05 is fully charged.

Specifically, the charging status display can include a battery power indicator light 10 and an AC indicator light 11. The battery power indicator light 10 is arranged on the side of the protective plate 03 to display the charging status and the charged amount of the battery 16. The AC indicator light 11 is arranged at the bottom of the protective plate 03 to indicate whether the battery charging device has been powered on.

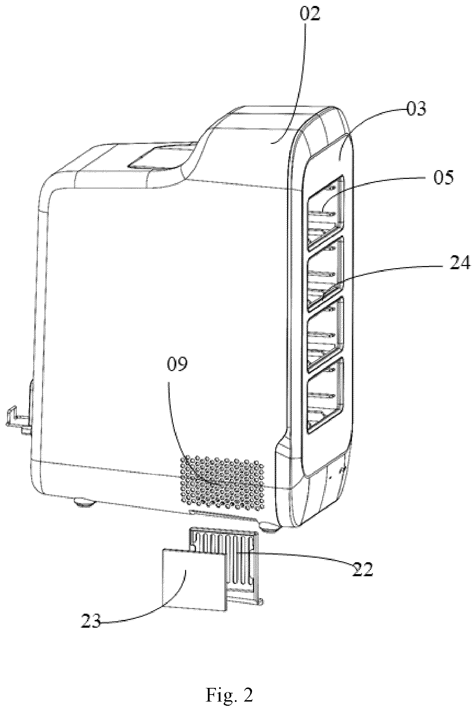

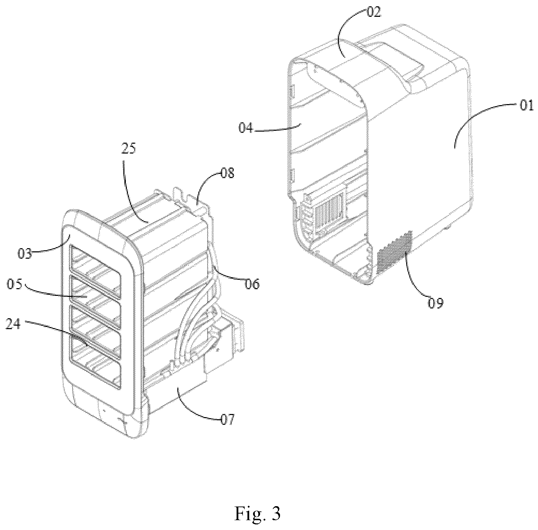

In an embodiment of the present application, as shown in FIG. 2 and 3, a heat dissipation area is arranged on the side wall of the second chamber 07.

In an embodiment of the present application, a containment box is provided on the inner side of the charging box 16 at a position corresponding to the heat dissipation area, and a filter 22 is provided in the containment box. The containment box is slidably connected to the charging box 01 via a sliding member.

Specifically, the heat dissipation area can include the area where the heat dissipation hole(s) 09 are arranged on both sides of the second chamber 07 and the area where the fan and the fan opening (not shown) are arranged at the rear of the charging box 01. The heat dissipation area is mainly provided to facilitate heat dissipation. Since the main heat generating area is the second chamber 07, the openings arranged on both sides thereof can accelerate the air flow. The fan can be placed at the rear of the charging box 01 to reduce the volume and improve the appearance. As the front space is used to place the battery 16 and display the power status, if a fan is added in the front, the volume will increase. If the fan is placed on both sides, the volume will also increase due to the volume restrictions of other components. The fan is thus placed at the bottom of the rear of the charging box 01. By setting the heat dissipation area in this way, the volume can be reduced and the heat dissipation efficiency can be improved. The direction of air flow can be entering the heat dissipation hole(s) 09 and then exiting the fan port, or entering the fan port and then exiting the heat dissipation port, which is not specifically limited herein.

The containment box 23 is provided at the location of the heat dissipation hole(s) 09, and a filter 22 is provided inside the containment box 23. The containment box and the charging box 01 are connected by a sliding member. The filter 22 can be made of materials with a porous structure or adsorption capacity, such as filter cotton, filter mesh, activated carbon, sponge, acrylic cotton, ion exchange resin, etc. In this solution, for example, filter cotton is selected. The filter 22 is provided to prevent dust from entering the interior to interfere with the operation of the device in the second chamber 07. The sliding member can realize the rapid disassembly of the filter 22 so that the filter 22 can be quickly replaced.

The following is a detailed description of the use of the battery charging device provided by the present application in various states:
When the battery charging device provided by the present application is not transported, the battery 16 is first inserted into the battery compartment 05, and the battery 16 slides into the battery compartment 05. The charging end of the battery 16 is connected to the charging port 19, and the output port of the battery 16 is matched and fixed with the fixing member 18. The current passes through the switching power supply 14 and the current is input through the charging port 19 to the charging end of the battery 16. The status and power information of the battery 16 are presented on the charging status display. When the battery 16 is needed, the battery 16 is directly pulled out from the battery compartment 05. If liquid enters the battery compartment 05, the liquid flows into the second opening 13 along the inclined battery compartment 05, and then is discharged to the liquid outlet pipe 15 at the bottom of the charging box 01 through the drainage channel 06. When there is a large amount of liquid, if the second opening 13 cannot discharge the liquid in time and the liquid level in the battery compartment 05 accumulates to reach the lower part of the inlet end 24, the liquid can be discharged from the inlet end 24, thereby avoiding the occurrence of failures during the charging process of the battery 16.

When the battery charging device provided by the present application is transported, the battery charging device is lifted by using the grip 02. Due to the position of grip 02 and the overall weight arrangement of the battery charging device, the lifted battery charging device will be in an upward tilted state. Since the gravity is downward, it is difficult for the battery 16 to be dislodged in this tilted state. At the same time, the friction force is increased by the cooperation between the fixing member 18 and the power output port of the battery 16 and the elastic effect of the shielding member, making it more difficult for the battery 16 to be dislodged. If liquid seeps into the battery compartment 05 in rainy or snowy weather, the liquid will flow into the second opening 13 along the tilted battery compartment 05, and then be discharged to the liquid outlet pipe 15 at the bottom of the charging box 01 through the drainage channel 06. In this way, the liquid will finally flow out through the liquid outlet 21 at the bottom of the charging box 01.

Finally, it should be noted that the above embodiments are only used to illustrate the technical solutions of the present application, rather than to limit them. Although the present application has been described in detail with reference to the above embodiments, a person of ordinary skill in the art should understand that the technical solutions disclosed in the above embodiments can still be modified and some or all of the technical features thereof can be replaced with equivalents; these modifications or replacements do not make the essence of the corresponding technical solutions deviate from the scope of the technical solutions of the embodiments of the present application.

## Claims

1. A battery charging device comprising:
a charging box; and
a first chamber;
wherein;
the first chamber is provided with a plurality of battery compartments for placing batteries;
the charging box includes a first opening for taking in and out the first chamber, the first opening being on a first side of the charging box;
each of the battery compartments include an inlet end of the battery compartments that is located consistent with the first side of the charging box where the first opening is located;
each of the battery compartments include a second end that is away from the inlet end and lower than the inlet end such that the battery compartments are tilted;
each of the battery compartments includes with a charging port that matches with a charging end of the batteries;
the charging box includes a grip on a top of the charging box close to the first opening, and when the battery charging device is lifted by the grip, a tilt direction of the battery charging device is consistent with a tilt direction of the battery compartments.

2. The battery charging device according to claim 1, wherein the first chamber is provided with a drainage channel, each battery compartment is provided with a second opening at the second end, each second opening is in communication with the drainage channel such that liquid in any of the battery compartments is discharged through the second opening and the drainage channel.

3. The battery charging device according to claim 1 or 2, wherein:
an inner side of each of the battery compartments is provided with a support guide rib such that a battery in its respective battery compartment is tightly fitted with the support guide rib; and
the support guide rib is arranged in a direction from the inlet end to the second end, and there is a gap between the battery and an inner wall of its respective battery compartment.

4. The battery charging device according to claim 2 or 3, wherein the charging box includes a liquid outlet pipe at a bottom of the charging box, and wherein the drainage channel is in communication with the liquid outlet pipe.

5. The battery charging device according any one of the preceding claims 2 to 4, wherein a height of a lower part of the second opening in each battery compartment is lower than a height of a lower part of the inlet end of each battery compartment, and wherein the height of the lower part of the inlet end of the battery compartment is lower than a height of a lower part of the charging port in each battery compartment.

6. The battery charging device according to any one of the preceding claims, wherein each battery compartment includes an elastic shielding member at the inlet end, wherein the elastic shielding member contacts an upper surface of its respective battery to shield a gap between the upper surface of the battery and the inner wall of its respective battery compartment.

7. The battery charging device according to claim 6, wherein the battery charging device further comprises a protective plate, the protective plate being arranged on the first side of the charging box, and the first side is tilted in a direction away from the inlet end of the battery compartment.

8. The battery charging device according to any one of the preceding claims, wherein a part of the battery at the inlet end of its respective battery compartment is exposed outside the battery compartment and/or
wherein a side wall of each battery compartment includes a fixing member, and wherein a power output terminal of the battery in each battery compartment is connected to the fixing member to fix the battery in each battery compartment on the side wall of its respective battery compartment.

9. The battery charging device according to any one of the preceding claims, wherein:
a second chamber is provided in a bottom of the charging box;
a switching power supply is provided in the second chamber; and
the switching power supply is connected to the charging port.

10. A battery charging device comprising:
a charging box including a front opening; and
a first chamber including a plurality of battery compartments, the first chamber being configured to fit in the charging box through the front opening, wherein each of the battery compartments:
includes an inlet end configured to receive a battery;
includes a drain opening at a drain end that is opposite of the inlet end; and
is tilted downwards from the inlet end to the drain end; and
a plurality of drainage channels, wherein each drainage channel is in communication with a respective drain opening to drain liquid from a respective battery compartment.

11. The battery charging device according to claim 10, wherein each of the drainage channels is in communication with a liquid outlet pipe.

12. The battery charging device according to claim 10 or 11, wherein each of the battery compartments includes a charging port at the drain end,
wherein preferably each battery compartment is configured such that a part of the battery at the inlet end is exposed when the battery is connected to the charging port.

13. The battery charging device according to claim 12, further comprising a second chamber in a bottom of the charging box,
preferably further comprising a switching power supply in the second chamber, wherein the switching power supply is connected to each of the charging ports.

14. The battery charging device according to any one of the preceding claims 10 to 13, wherein the charging box includes a grip on a top of the charging box, the grip being positioned near the front opening such that a center of gravity of the battery charging device is to the rear of the grip and/or
wherein the inlet end of each of the battery compartments is on a front side of the first chamber such that each inlet end is exposed when the first chamber is in the charging box.

15. The battery charging device according to any one of the preceding claims 10 to 14, wherein each battery compartment includes a support guide rib that extends from the inlet end towards the drain end, the support guide rib being configured to tightly fit with the battery,
wherein preferably each support guide rib creates a gap between the inner side and the battery.
